# EUROPÄISCHE PATENTANMELDUNG

(11) **EP 1 811 221 A1**
(43) Veröffentlichungstag der Anmeldung: **25.07.2007**
(21) Anmeldenummer: 07001382.6
(22) Anmeldetag: 23.01.2007
(51) Int. Cl.: F16L 25/00

(54) **Rohrverbindung mit Sicherungsmittel**

(30) Priorität: 24.01.2006 DE 202006001126 U
(71) Anmelder: Technaflon AG, 8274 Tägerwilen (CH)
(72) Erfinder: Wunsch, Horst, 8597 Landschlacht / TG (CH)
(74) Vertreter: Nüsse, Stephan

(57) **Zusammenfassung**

Bei Rohrverbindungen für zwei Rohre spielt insbesondere bei zu führenden giftigen Fluiden mit ggf. erhöhtem Nassanteil die Dichtigkeit einer Rohrverbindung, insbesondere in dem Falle, dass es sich bei einem Rohr der Rohrverbindung um ein Biegerohr handelt, welches variable Biegewinkel einnehmen kann und beweglich ist, eine zunehmend wichtige Rolle. Die Erfindung geht aus von einer Rohrverbindung (10) für zwei Rohre (1, 2) mit im wesentlichen gleichen Durchmessern (R₁, R₂) zur Bildung einer Muffenverbindung (10), wobei ein erster Rohrabschnitt (11) des einen Rohres (1) als ein Wellrohr ausgebildet ist und ein zweiter Rohrabschnitt (12) des anderen Rohres (2) ein verjüngtes Ende (5) zur Einführung in den ersten Rohrabschnitt (11) aufweist. Erfindungsgemäß sieht die Erfindung zur Verbesserung hinsichtlich der genannten Aspekte vor, dass am zweiten Rohrabschnitt (12) eine das verjüngte Ende (5) umgebende Hülse (7) zur Aufnahme des ersten Rohrabschnitts (11) einstückig angeformt ist, und der zweite Rohrabschnitt (12) Mittel zur Sicherung der Muffenverbindung (10) aufweist.

## Beschreibung

Die Erfindung betrifft eine Rohrverbindung für zwei Rohre mit im wesentlichen gleichen Durchmessern zur Bildung einer Muffenverbindung, wobei ein erster Rohrabschnitt des einen Rohres als ein Wellrohr ausgebildet ist und ein zweiter Rohrabschnitt des anderen Rohres ein verjüngtes Ende zur Einführung in den ersten Rohrabschnitt aufweist.

Rohrverbindungen der genannten Art finden insbesondere im Bauwesen Anwendung. Dabei dienen Rohrleitungen, bei denen eine Rohrverbindung der eingangs genannten Art eingesetzt wird, in der Regel als Abgasleitung für Abgase einer Verbrennungsanlage. In zunehmendem Maße hat es sich dabei als wichtig erwiesen, dass die Rohre auch zur Zurückhaltung eines erheblichen Nassanteils der Abgase einer Verbrennungsanlage geeignet sein sollten. Dies hat den Vorteil, dass ein Großteil der Abgase zusammen mit dem Nassanteil im Rohr verbleibt bzw. in die Verbrennungsanlage rückgeführt wird. In diesem Zusammenhang sind die Rohrleitungen und eine entsprechende Rohrverbindung allerdings in der Regel auch giftigen, aggressiv und/oder jedenfalls sauer wirkenden Nassumgebungen ausgesetzt. Um insbesondere das Rückhaltevermögen einer Rohrverbindung, vor allem deren Dichtigkeit, zu verbessern, sind eine Reihe von Maßnahmen vorgeschlagen worden. Dabei reicht das Spektrum von einfachen Steckverbindungen bis zu aufwändigen Muffenverbindungen. Grundsätzlich zeigt sich dabei, dass oftmals die Dichtigkeit einer Rohrverbindung zu Lasten einer einfachen Verbindungs-Handhabung derselben geht. Insbesondere besteht bei beweglich gelagerten Rohrverbindungen der unter Eigenspannung stehenden Rohrverbindungen die Gefahr, dass sich die Rohrabschnitte voneinander lösen und sich die Rohrverbindung öffnet.

Wünschenswert wäre es, eine gleichzeitig dichte und einfach handzuhabende Rohrverbindung zu realisieren.

An dieser Stelle setzt die Erfindung an, deren Aufgabe es ist, eine Rohrverbindung anzugeben, die zwei Rohre mit im wesentlichen gleichen Durchmessern zur Bildung einer Muffenverbindung auf möglichst sichere Weise verbindet und dabei gleichzeitig einfach zu handhaben ist.

Die Aufgabe der Erfindung wird gelöst durch eine Rohrverbindung der eingangs genannten Art, wobei erfindungsgemäß vorgesehen ist, dass am zweiten Rohrabschnitt eine das verjüngte Ende umgebende Hülse zur Aufnahme des ersten Rohrabschnitts einstückig angeformt ist und der zweite Rohrabschnitt Sicherungsmittel zur Sicherung der Muffenverbindung aufweist.

Üblicherweise ist unter einer Muffe ein Verbindungsstück in Form eines Hohlzylinders zu verstehen. Vorliegend wird durch das verjüngte Ende und die das verjüngte Ende umgebende Hülse des zweiten Rohrabschnitts ein Ringraum zur Aufnahme des Wellrohres des ersten Rohrabschnitts gebildet. Im Querschnitt weist das zweite Rohr also eine Aufgabelung der Rohrwand im Bereich des zweiten Rohrabschnitts auf, welche zur Aufnahme des Wellrohres des ersten Rohrabschnitts zur anderen Seite hin offen ist.

Der zweite Rohrabschnitt weist darüber hinaus erfindungsgemäß Sicherungsmittel zur Sicherung der Muffenverbindung auf.

Die Erfindung hat erkannt, dass sich der genannte Ringraum zur Aufnahme des Wellrohres als besonders dicht bei der Realisierung der Verbindung erweist und zum anderen durch ein Sicherungsmittel die Muffenverbindung gegen Lösen gesichert werden kann. Das Sicherungsmittel lässt sich auf unterschiedliche und gleichzeitig einfache Weise zweckmäßig realisieren.

Somit ist eine gleichzeitig sichere als auch leicht handzuhabende Rohrverbindung realisiert. Sie kann insbesondere im Abgasanlagen-Bau innerhalb von Gebäuden eingesetzt werden, insbesondere um auf verlässliche Weise auch Abgase einer Verbrennungsanlage mit erheblichem Nassanteil zu führen.

Vorteilhafte Weiterbildungen der Erfindung sind den Unteransprüchen zu entnehmen und geben im einzelnen vorteilhafte Möglichkeiten an, das oben erläuterte Konzept im Rahmen der Aufgabenstellung sowie hinsichtlich weiterer Vorteile zu realisieren.

Vorzugsweise nimmt die Wandstärke des verjüngten Endes zum Ende des zweiten Rohrabschnitts hin ab. Dies hat den Vorteil, dass das Wellrohr in einen vergleichsweise großen Öffnungsquerschnitt des oben genannten Ringraumes eingeführt werden kann. Darüber hinaus hat sich als vorteilhaft erwiesen, den Ringraum zur oben genannten Gabelung hin zu verjüngen, so dass das Wellrohr bei Einführung in den Ringraum vorzugsweise eingeklemmt wird. Damit lässt sich das Wellrohr des ersten Rohrabschnitts besonders einfach mit dem zweiten Rohrabschnitt verbinden und kann zudem durch die Klemmwirkung bereits in vorteilhafter Weise gesichert werden.

Vorteilhaft gehen die Hülse und das verjüngte Ende in einer asymmetrischen Gabelung vom zweiten Rohrabschnitt ab. Mit anderen Worten, in einer Querschnittsansicht liegt eine gedachte Fortsetzung der Rohrwand des zweiten Rohres neben einer mittigen Achse des durch das verjüngte Ende und die Hülse gebildeten Ringraumes. Auf diese Weise wird ein innerer Rohrquerschnitt in vergleichsweise geringem Maße im Bereich der Rohrverbindung eingeschränkt.

Darüber hinaus haben sich weitere Mittel zur Sicherung der Rohrverbindung als besonders vorteilhaft erwiesen.

Vorzugsweise ist die Hülse von einem beweglichen Ringelement umfasst. Das genannte Ringelement eignet sich insbesondere zum Hin- und Herschieben und dient als zusätzliches Mittel zur Sicherung. Das Ringelement kann über die Hülse geschoben werden, um auf diese von außen eine Klemmwirkung auszuüben, so dass dadurch der erste Rohrabschnitt zusätzlich von außen im oben genannten Ringraum eingeklemmt wird.

Vorzugsweise weist die Hülse auf ihrer Außenseite eine zu ihrem Ende hin hochlaufende Rampe auf. Dies hat den Vorteil, dass das Ringelement über die hochlaufende Rampe geschoben werden muss und sich damit die Klemmwirkung erhöhen lässt. Die hochlaufende Rampe dient dabei als zusätzliches Sicherungsmittel.

Zweckmäßigerweise weist die Hülse an ihrem Ende ein nach innen gerichtetes Rastelement auf. Das Rastelement dient in vorteilhafter Weise zum Eingriff in eine Welle des Wellrohres und damit als zusätzliches Sicherungsmittel. Nach Einrasten des Rastelements in einer Welle des Wellrohres ist ein Auseinanderziehen des ersten Rohrabschnitts und zweiten Rohrabschnitts zur Lösung der Rohrverbindung praktisch nicht mehr möglich.

Zweckmäßigerweise weist die Hülse einen nach außen gerichteten Anschlag auf. Der Anschlag ist vorzugsweise am Ende der Hülse angeordnet und dient als Anschlag für den Sicherungsring, der somit nicht über die Hülse hinausgeschoben werden kann.

Vorzugsweise weist die Hülse auf der Außenseite eine zwischen der Rampe und dem Anschlag angeordnete zu ihrem Ende hin herunterlaufende Abschrägung auf. In vorteilhafter Weise wird dadurch eine Rückrutschsicherung für den Sicherungsring realisiert. Die Rückrutschsicherung dient als zusätzliches Sicherungsmittel und vermeidet ein Zurückrutschen des Sicherungsringes, nachdem dieser einmal über die Rampe bis zum Anschlag geschoben wurde.

In einer besonders hervorzuhebenden vervollkommnenden Weiterbildung der vorliegenden Erfindung sind die oben genannten Sicherungsmittel bei der Rohrverbindung in Kombination realisiert. Mit anderen Worten, die Rohrverbindung weist vorteilhafterweise die abnehmende Wandstärke, die Rampe, das Randelement, eine Welle des Wellrohres, das bewegliche Ringelement, den Anschlag und die Abschrägung als Sicherungsmittel bildende Merkmale auf.

Im Bereich der Rohrverbindungen für die Führung von Abgasen aus Verbrennungsanlagen hat sich insbesondere PVDF als Material für Rohre oder Rohrabschnitte als vorteilhaft erwiesen. Grundsätzlich sind darüber hinaus auch andere säurefeste Thermoplaste geeignet.

Vorzugsweise besteht die Hülse und/oder das Ringelement aus einem weniger säurefesten Material. Dies kann beispielsweise ein Polyamid- oder PAGGF-Material sein. Da die genannten Teile nicht mit saurem Kondensat in Berührung kommen, können diese aus preiswerterem Material bestehen. Geeigneterweise sind diese Teile auch z.B. durch eine Färbung in der Signalfarbe rot und/oder durch eine Auf/Zu-Markierung gekennzeichnet.

Ausführungsbeispiele der Erfindung werden nun nachfolgend anhand der Zeichnung im Vergleich zum Stand der Technik beschrieben. Diese soll die Ausführungsbeispiele nicht maßgeblich darstellen, vielmehr ist die Zeichnung wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen.

Dabei ist zu berücksichtigen das vielfältige Modifikationen und Änderungen betreffend Form und Details einer Ausführungsform vorgenommen werden können, ohne von der allgemeinen Idee der Erfindung abzuweichen. Die in der vorstehenden Beschreibung, in der Zeichnung sowie in den Ansprüchen offenbarten Merkmale der Erfindung können sowohl einzeln als auch beliebiger Kombination für die Weiterbildung der Erfindung wesentlich sein. Die allgemeine Idee der Erfindung ist nicht beschränkt auf die exakte Form oder das Detail der im folgenden gezeigten und beschriebenen Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Zum weiteren Verständnis der Erfindung wird nun in Bezug auf die Figuren der Zeichnung eine besonders bevorzugte Ausführungsform der Erfindung erläutert. Die Zeichnung zeigt in:
- Fig. 1:: eine Rohrverbindung für zwei Rohre mit im wesentlichen gleichen Durchmessern zur Bildung einer Muffenverbindung mit offenem Sicherungsring;
- Fig. 2:: die Rohrverbindung der Fig. 1 mit geschlossenem Sicherungsring.

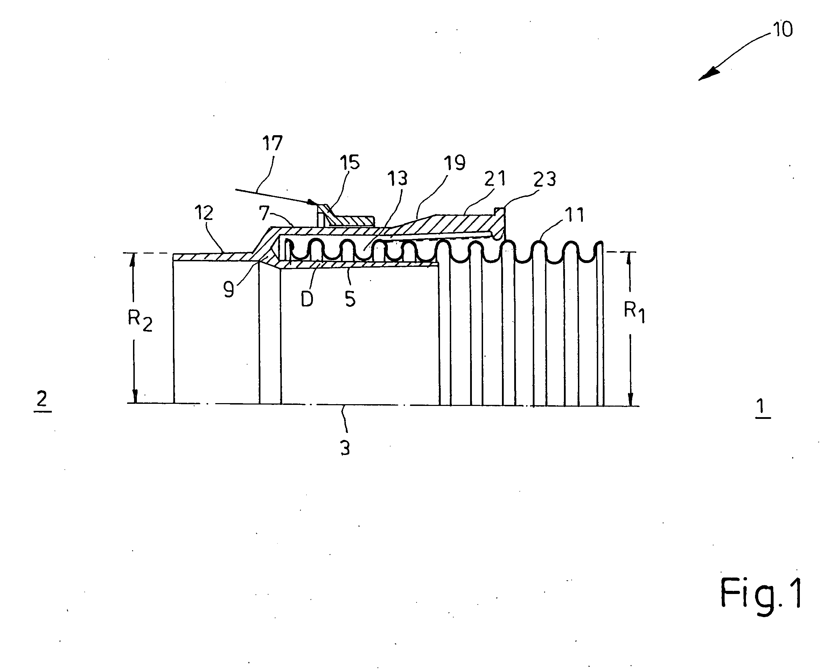

Fig. 1 zeigt eine Rohrverbindung 10 für zwei nicht näher dargestellte Rohre 1 und 2 einer Abgasanlage, die in einem Halbschnitt bezüglich einer Symmetrieachse 3 dargestellt sind. Wie die eingetragenen Radiusmaße R1 und R2 verdeutlichen, weisen dabei beide Rohre 1 und 2 im wesentlichen gleiche Durchmesser zur Bildung einer Muffenverbindung 10 auf. Die Rohre 1, 2 können in Form eines Glattrohres oder Bogenrohres oder eines T-Stücks angeschlossen sein. Dieser Anschluss kann durch eine Spiegelschweißung erfolgen.

Ein erster Rohrabschnitt 11 eines ersten Rohres 1 ist dabei als ein Wellrohr ausgebildet. Das Wellrohr eignet sich insbesondere zur Überwindung von Winkelführungen oder für eine Stelle bei einer Rohrleitung, die winkelbeweglich oder gestaucht werden kann, d.h., flexibel im allgemeinen Sinne gehalten werden soll. Bei einer solchen Situation soll eine Rohrverbindung besonders sicher ausgestaltet sein, da sie im Falle einer starken Winkelverbiegung oder bei häufig auftretenden Stauchungen oder sonstigen Bewegungen besonders gefährdet hinsichtlich eines Lösens der Rohrabschnitte voneinander ist und dabei die Gefahr besteht, dass sich die Rohrverbindung öffnet.

Ein zweiter Rohrabschnitt 12 des zweiten Rohres 2 weist ein verjüngtes Ende 5 zur Einführung in den ersten Rohrabschnitt 11 auf. Darüber hinaus weist der zweite Rohrabschnitt 12 eine das verjüngte Ende 5 umgebende Hülse 7 auf, die einstückig am zweiten Rohrabschnitt 12 angeformt ist. In dem durch Hülse 7 und verjüngtem Ende 5 gebildeten Ringraum wird der erste Rohrabschnitt 1 aufgenommen. Zusätzlich weist der zweite Rohrabschnitt 12 Sicherungsmittel zur Sicherung der Muffenverbindung 10 auf.

Dadurch ist gemäß dem Konzept der Erfindung gewährleistet, dass diese Rohrverbindung ausreichend dicht ist und insbesondere gegen ein ungewolltes Sich-Öffnen gesichert ist. Als Sicherungsmittel dienen insbesondere die im Rahmen der vorliegenden Ausführungsform wie folgt vorhandenen Merkmale.

Die Wandstärke D des verjüngten Endes nimmt zum Ende des zweiten Rohrabschnitts 12 hin ab. Die Hülse 7 und das verjüngte Ende 5 gehen in einer asymmetrischen Gabelung 9 vom zweiten Rohrabschnitt 12 ab. Bei Einführung des durch ein Wellrohr gebildeten ersten Rohrabschnitts 11 in den Ringraum 13 wird somit die Einführung aufgrund der abnehmenden Wandstärke D vereinfacht und zum anderen wird in der Nähe der Gabelung 9 eine Klemmwirkung auf den zweiten Rohrabschnitt 11 ausgeübt, so dass bereits beim Einstecken des zweiten Rohrabschnitts 11 in den Ringraum 13 des zweiten Rohrabschnitts 12 eine Klemmwirkung zur Sicherung der Rohrverbindung 10 zum Tragen kommt.

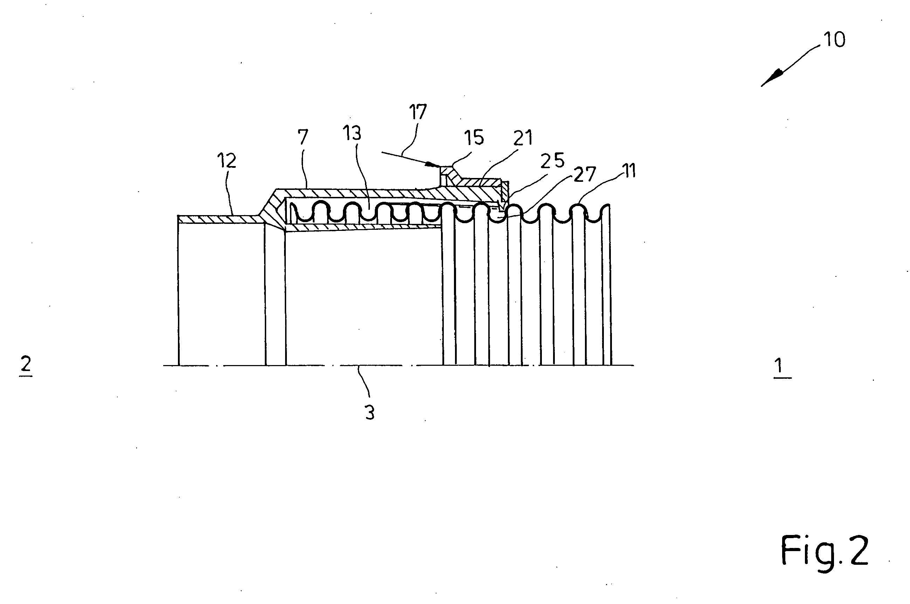

Zur weiteren Sicherung der Rohrverbindung wird ein Sicherungsring 15 in Richtung des Pfeils 17 zunächst über eine auf der Außenseite zum Ende der Hülse 7 hochlaufende Rampe 19 und dann über eine zum Ende der Hülse 7 hin herunterlaufende Abschrägung 21 bis zu einem nach außen gerichtetem Anschlag 23 der Hülse geschoben. In diesem Zustand ist der Sicherungsring 15 in Fig. 2 bei der Rohrverbindung 10 gezeigt. Dabei rastet ein an der Hülse 7 angebrachtes nach innen gerichtetes Rastelement 25 in eine Welle 27 des als Wellrohr ausgebildeten ersten Rohrabschnitts 11 ein. In diesem Zustand ist die Rohrverbindung 10 nicht nur aufgrund der Klemmwirkung im Ringraum 13 und der Klemmwirkung der Hülse 7 auf das äußere des ersten Rohrabschnitts 11 gesichert. Darüber hinaus bewirkt nämlich der in Richtung des Pfeils 17 vorgeschobene über dieses Rastelement 25 arretierte Sicherungsring 15 das selbst bei massiven Zugkräften, welche die Rohre 1 und 2 auseinander zu ziehen suchen, das Rastelement 25 in seiner Verrastung in der Welle 27 des Wellrohres des ersten Rohrabschnitts 11 verbleiben würde, so dass auch bei massivem Kraftaufwand die Rohrverbindung 10 nicht getrennt werden kann.

Dabei ist bei dieser Ausführungsform besonders vorteilhaft vorgesehen, dass auch ein Zurückrutschen des Sicherungsrings 15 gegen die Pfeilrichtung 17 dadurch verhindert ist, dass der Sicherungsring sich gegen die in Fig. 1 näher erläuterte herunterlaufende Abschrägung 21 zu bewegen hätte. Die Rohrverbindung 10 ist also zweifach gesichert. Zum einen ist der Sicherungsring 15 gegen ein Zurückrutschen gesichert. Zum anderen ist ein Auseinanderziehen der Rohre 1 und 2 durch das Rastelement 25 in der Welle 27 und die oben beschriebenen Klemmwirkungen gesichert.

Bei der vorliegenden Ausführungsform ist sowohl das Rohr 1 als auch der Rohrabschnitt 11 in Form eines Wellrohres ausgebildet, das vollständig aus PVDF besteht. Ebenso besteht das Rohr 2 als auch der zweite Rohrabschnitt aus PVDF. Geeignet sind auch andere Thermoplaste, wie. z.B. Polypropylen. In dieser Ausführung eignet sich die durch die Rohre 1 und 2 und die Rohrabschnitte 11 und 12 gebildete Rohrleitung für eine Abgasanlage zur Leitung von giftigen und stark aggressiven Verbrennungsabgasen mit hohem Nassanteil. Dieser kann besonders vorteilhaft z.B. in einer durch das Wellrohr gebildeten Biegung kondensieren, sO dass auf diese Weise Verbrennungsgase erst gar nicht an die Umwelt abgegeben werden, sondern in der Heizungsrohrleitung verbleiben bzw. in den Verbrennungsraum zurückgeführt werden.

Bei Rohrverbindungen für zwei Rohre spielt insbesondere bei zu führenden giftigen Fluiden mit ggf. erhöhtem Nassanteil die Dichtigkeit einer Rohrverbindung, insbesondere in dem Falle, dass es sich bei einem Rohr der Rohrverbindung um ein Biegerohr handelt, welches variable Biegewinkel einnehmen kann und beweglich ist, eine zunehmend wichtige Rolle. Die Erfindung geht aus von einer Rohrverbindung 10 für zwei Rohre 1, 2 mit im wesentlichen gleichen Durchmessern R₁, R₂ zur Bildung einer Muffenverbindung 10, wobei ein erster Rohrabschnitt 11 des einen Rohres 1 als ein Wellrohr ausgebildet ist und ein zweiter Rohrabschnitt 12 des anderen Rohres 2 ein verjüngtes Ende 5 zur Einführung in den ersten Rohrabschnitt 11 aufweist. Erfindungsgemäß sieht die Erfindung zur Verbesserung hinsichtlich der genannten Aspekte vor, dass am zweiten Rohrabschnitt 12 eine das verjüngte Ende 5 umgebende Hülse 7 zur Aufnahme des ersten Rohrabschnitts 11 einstückig angeformt ist, und der zweite Rohrabschnitt 12 Mittel zur Sicherung der Muffenverbindung aufweist.

## Patentansprüche

1. Rohrverbindung (10) für zwei Rohre (1, 2) mit im wesentlichen gleichen Durchmessern (R₁, R₂) zur Bildung einer Muffenverbindung (10), wobei ein erster Rohrabschnitt (11) des einen Rohres (1) als ein Wellrohr ausgebildet ist und ein zweiter Rohrabschnitt (12) des anderen Rohres (2) ein verjüngtes Ende (5) zur Einführung in den ersten Rohrabschnitt (11) aufweist,
**dadurch gekennzeichnet, dass**
am zweiten Rohrabschnitt (12) eine das verjüngte Ende (5) umgebende Hülse (7) zur Aufnahme des ersten Rohrabschnitts (11) einstückig angeformt ist, und der zweite Rohrabschnitt (12) Sicherungsmittel zur Sicherung der Muffenverbindung (10) aufweist.

2. Rohrverbindung (10) nach Anspruch 1, **dadurch gekennzeichnet, dass** die Wandstärke (D) des verjüngten Endes (5) zum Ende des zweiten Rohrabschnitts (12) hin abnimmt .

3. Rohrverbindung (10) nach Anspruch 1 oder 2, **dadurch gekennzeichnet, dass** die Hülse (7) und das verjüngte Ende (5) in einer asymmetrischen Gabelung (9) vom zweiten Rohrabschnitt (12) abgehen.

4. Rohrverbindung (10) nach einem der Ansprüche 1 bis 3, **dadurch gekennzeichnet, dass** die Hülse (7) von einem beweglichen Ringelement (15) umfasst ist.

5. Rohrverbindung (10) nach einem der Ansprüche 1 bis 4, **dadurch gekennzeichnet, dass** die Hülse (7) auf ihrer Außenseite eine zu ihrem Ende hin hochlaufende Rampe (19) aufweist.

6. Rohrverbindung (10) nach einem der Ansprüche 1 bis 5, **dadurch gekennzeichnet, dass** die Hülse (7) an ihrem Ende ein nach innen gerichtetes Rastelement (25) aufweist.

7. Rohrverbindung (10) nach einem der Ansprüche 1 bis 6, **dadurch gekennzeichnet, dass** die Hülse (7) einen nach außen gerichteten Anschlag (23) aufweist.

8. Rohrverbindung (10) nach Anspruch 4 und 6, **dadurch gekennzeichnet, dass** die Hülse (7) auf der Außenseite eine zwischen der Rampe (19) und dem Anschlag (23) angeordnete zu ihrem Ende hin herunterlaufende Abschrägung (21) aufweist.

9. Rohrverbindung (10) nach den Ansprüchen 3 bis 8, **dadurch gekennzeichnet, dass** die abnehmende Wandstärke (D) die Rampe (19), das Rastelement (25), eine Welle (27) des Wellrohres, das bewegliche Ringelement (15), der Anschlag (23) und die Abschrägung (21) die Sicherungsmittel bilden.

10. Rohrverbindung (10) nach einem der Ansprüche 1 bis 9, **dadurch gekennzeichnet, dass** wenigstens der erste (11) oder der zweite (12) Rohrabschnitt und/oder wenigstens eines der Rohre (1, 2) aus PVDF bestehen.

11. Rohrverbindung (10) nach einem der Ansprüche 1 bis 10, **dadurch gekennzeichnet, dass** die Hülse (7) und/oder das Ringelement aus einem Polyamidmaterial oder einem PAGGF-Material besteht.

12. Rohrverbindung (10) nach einem der Ansprüche 1 bis 11, **dadurch gekennzeichnet, dass** die Hülse (7) und/oder das Ringelement **gekennzeichnet** ist, insbesondere gefärbt ist und/oder eine Markierung trägt.
